Europäisches Patentamt

European Patent Office

Office européen des brevets

(19)

(11) **EP 0 243 786 B2**

(12) **NEUE EUROPÄISCHE PATENTSCHRIFT**

(45) Veröffentlichungstag und Bekanntmachung des Hinweises auf die Entscheidung über den Einspruch:
**04.09.1996   Patentblatt 1996/36**

(51) Int Cl.⁶: **E05F 3/10**

(45) Hinweis auf die Patenterteilung:
**12.09.1990   Patentblatt 1990/37**

(21) Anmeldenummer: **87105520.8**

(22) Anmeldetag: **14.04.1987**

(54) **Türschliesser**

Door closer

Ferme-porte

(84) Benannte Vertragsstaaten:
**AT BE CH FR GB IT LI LU NL SE**

(30) Priorität: **28.04.1986 EP 86105855**
**10.11.1986 DE 3638353**

(43) Veröffentlichungstag der Anmeldung:
**04.11.1987   Patentblatt 1987/45**

(73) Patentinhaber: **GEZE Grundstücks- und Beteiligungsgesellschaft mbH**
**D-71226 Leonberg (DE)**

(72) Erfinder:
• **Scheck, Georg**
**D-7533 Tiefenbronn 1 (DE)**

• **Feucht, Fritz**
**D-7252 Weil der Stadt 2 (DE)**
• **Storandt, Ralf, Dr.**
**D-7250 Leonberg 6 (DE)**
• **Furch, Gerhard**
**D-7032 Sindelfingen (DE)**

(56) Entgegenhaltungen:

| | |
|---|---|
| DE-C- 941 264 | FR-A- 966 945 |
| FR-A- 1 510 056 | IT-A- 580 797 |
| US-A- 1 142 051 | US-A- 1 359 144 |
| US-A- 2 933 755 | US-A- 3 267 763 |

**Beschreibung**

Die Erfindung betrifft einen Türschließer mit einem in einem Gehäuse geführten Kolben, zumindest einer mit dem Kolben zusammenwirkenden Schließerfeder und einer hydraulischen Dämpfungseinrichtung und mit einer über ein Getriebe mit dem Kolben verbundenen Schließerwelle oder Schließerachse, wobei das Getriebe mindestens ein Zahnritzel aufweist, das exzentrisch gelagert ist (vgl. FR-A-966 945).

An dem aus der FR-A-966 945 bekannten Türschließer, der ein an der Tür angelenktes Schließergehäuse aufweist, ist die Schließerwelle mit einem exzentrisch gelagerten Zahnrad verbunden, das mit einer schrägen kolbenseitigen Zahnstange kämmt. Mit diesem herkömmlichen Getriebe wird aufgrund der unterschiedlich langen Hebelarme des Zahnrades eine dem Schließkraftverlauf angepaßte Übersetzung erhalten.

Das gleiche gilt für den aus der FR-A-15 10 056 bekannten Schließer, dessen Gehäuse fest am Türblatt oder am Türrahmen montiert ist und ein kraftübertragendes Gestänge zwischen Tür und Rahmen aufweist. Dieser bekannte Schließer weist ein Getriebe mit zwei elliptischen Zahnrädern auf.

Bei einem aus der US-A-13 59 144 bekannten pneumatischen Türschließer mit krahübertragendem Scherengestänge ist die Schließerwelle mit einem kreisrunden exzentrisch gelagerten Zahnritzel verbunden, das mit einer ungeraden Zahnstange am Kolben kämmt. Bei dem verwendeten Zahnritzel handelt es sich um ein kerkömmliches kreisrundes Ritzel mit regelmäßiger Verzahnung und kreisförmiger Wälzkurve.

Durch die exzentrische Lagerung werden unterschiedliche Hebelarme wirksam.

Dem Übersetzungsverhältnis des jeweiligen Schließers, das heißt dem momentanen Verhältnis der Drehwinkelgeschwindigkeit der Schließerwelle zur Drehwinkelgeschwindigkeit der Tür muß in der Praxis große Aufmerksamkeit gewidmet werden, insbesondere dann, wenn an Schließer, seien es Obentürschließer oder Bodentürschließer, besondere Anforderungen gestellt werden. Dies ist beispielsweise der Fall bei sogenannten Gleitarmschließern, bei denen aufgrund der besonderen Übersetzungscharakteristik des Gleitarms ein spezieller Momentenverlauf an der Schließerwelle erforderlich ist, um die gewünschten Schließ- und Öffnungsmomente an der Tür zu erhalten.

Aufgabe der Erfindung ist es, einen Türschließer zu schaffen, der bei kompakter Bauweise einen günstigen Momentenverlauf liefert.

Die Aufgabe wird dadurch gelöst, daß bei dem eingangs genannten Türschließer vorgesehen ist daß das Zahnritzel auf seinem Umfang und/oder die dem Zahnritzel zugeordnete komplementäre Verzahnung auf Abschnitten der Wälzkurve unterschiedlich ausgestaltete Zähne aufweist, wie in den Patentansprüchen 1, 3 bzw. 5 beansprucht.

Vorteilhafterweise weist das exzentrisch gelagerte Zahnritzel eine unrunde, z.B. ovale oder elliptische Wälzkurve auf, kann jedoch auch als rundes exzentrisch gelagertes Ritzel ausgebildet sein.

Die kolbenseitige Verzahnung kann an einer Zahnstange mit vorzugsweise S-förmiger Wälzkurve ausgebildet sein.

Entweder an der zahnritzelseitigen Verzahnung oder an der zugeordneten komplementären Verzahnung oder an beiden Verzahnungen können unterschiedlich ausgestaltete Zähne vorgesehen sein. Beispielsweise können Profilverschiebung, Modul und/oder Flankenwinkel variiert sein. Hiermit ist es möglich, die einzelnen Zähne jeweils so zu gestalten, daß ein optimaler Verlauf des Schließmoments sowie des Öffnungsmoments und ein hoher Wirkungsgrad bei kompakter Bauweise des Schließers erreicht wird.

Um eine Optimierung dieser Schließerkenngrößen zu erhalten, kann vorgesehen sein, daß die Ausgestaltung der Zähne des Zahnritzels und/oder der komplementären Verzahnung in Abhängigkeit von den, den Wälzkurvenabschnitten zugeordneten Türöffnungswinkeln und/oder in Abhängigkeit vom jeweils wirksamen Hebelarm variiert ist.

Bei den Ausführungen, bei denen die zahnritzelseitige Verzahnung und/oder die dem Zahnritzel zugeordnete komplementäre Verzahnung über ihre Wälzkurve variierte Profilverschiebung aufweist ist vorteilhaft, wenn dabei die Profilverschiebung in der ritzelseitigen Verzahnung in einem Wälzkurvenabschnitt mit zugeordnetem größtem Türöffnungswinkel positiv ausgebildet ist. Dies bedeutet, daß die Verzahnung auf dem Ritzel radial nach außen verschoben ist. In dem betreffenden Bereich großer Türöffnungswinkel ist der Halbmesser des Ritzels relativ klein. Die positive Profilverschiebung schafft die Möglichkeit, auch in Anbetracht des kleinen Halbmessers eine Schließerwelle mit relativ großem Durchmesser zur Lagerung des Ritzels zu verwenden.

Die dem Zahnritzel zugeordnete komplementäre Verzahnung kann entsprechende, aber entgegengesetzte Profilverschiebung wie die zahnritzelseitige Verzahnung aufweisen.

In bevorzugter Weiterbildung ist vorgesehen, daß die Profilverschiebung der zahnritzelseitigen Verzahnung in einem Wälzkurvenabschnitt mit zugeordnetem kleinem Türöffnungswinkel negativ ausgebildet ist. Wenn die vorzugsweise als Zahnstange ausgebildete komplementäre kolbenseilige Verzahnung entsprechende, aber entgegengesetzte Profilverschiebung wie die zahnritzelseitige Verzahnung aufweist, ergibt sich, daß im Bereich kleiner Öffnungswinkel die kolbenseitige Verzahnung positive Profilverschiebung aufweist, mit der Folge, daß die Wandung in diesem Bereich durch die Verzahnung relativ wenig reduziert wird und daher der Kolben mit geringem Durchmesser ausgeführt werden kann.

Vorzugsweise nimmt die Profilverschiebung in der zahnritzelseitigen Verzahnung mit ansteigendem Türöffnungswinkel kontinuierlich in Richtung positiver Profilverschiebung zu.

Bei den Ausführungen, bei denen vorgesehen ist daß die zahnritzelseitige Verzahnung und/oder die dem Zahnritzel zugeordnete komplementäre Verzahnung über die Wälzkurve Zähne mit unterschiedlichem Modul aufweist, sind über die Wälzkurvenabschnitte unterschiedlich große Zähne vorgesehen. Damit kann die Festigkeit der Verzahnung in den einzelnen Wälzkurvenabschnitten beliebig eingestellt werden. Vorzugsweise wird der Modul bzw. die Zahngröße nur so groß gewählt, wiw für die Festigkeit erforderlich ist.

Um ungefähr gleiche Festigkeit über die gesamte Verzahnung zu erhalten, ist vorgesehen, daß der Modul umgekehrt proportional zum wirksamen Hebelarm ausgebildet ist. Vorzugsweise nimmt der Modul mit dem zugeordneten Türöffnungswinkel kontinuierlich zu.

Dadurch, daß die Verzahnung in Abschnitten der Wälzkurve mit zugeordnetem kleinem Türöffnungswinkel relativ kleinen Modul und in Abschnitten der Wälzkurve mit zugeordnetem großem Türöffnungswinkel größeren Modul aufweist, sind also im Bereich der kleinen Öffnungswinkel relativ kleine Zähne und im Bereich der großen Winkel größere Zähne vorgesehen. Dies gilt für die Zähne des Zahnritzels in gleicher Weise wie für die vorzugsweise als Kolbenstange ausgebildete kolbenseitige Verzahnung. Dabe kann die komplementäre kolbenseitige Verzahnung entsprechen variierte Module wie die zahnritzelseitige Verzahnung aufweisen.

Bei den Ausführungen, bei denen vorgesehen ist, daß die ritzelseitige Verzahnung und/oder die dem Zahnritzel zugeordnete komplementäre Verzahnung mindestens einen Zahn mit unterschiedlichen Flankenwinkeln aufweist, sind vorzugsweise mehrere solche Zähne, insbesondere im Bereich relativ großen Eingriffswinkels, vorgesehen, um die Wandreibung zu reduzieren. Der Eingriffswinkel entspricht zum Beispiel dem Steigungswinkel der Zahnstangenwälzkurve. Diese Ausgestaltung der Zähne ist von Vorteil im sogenannten Übergangsbereich der Zahnstange, d.h., in Nähe des Wendepunkts der S-kurvenförmigen Wälzkurve und in der komplementären ritzelseitigen Verzahnung. Es handelt sich um unsymmetrische Zähne, bei denen jeweils die druckseitige Flanke einen spitzeren Flankenwinkel als eine nicht druckseitige Flanke aufweist. Dies bewirkt, daß die Kraftkomponente in Richtung der Seitenwand und damit auch die Wandreibung relativ gering gehalten werden.

Die dem Zahnritzel zugeordnete komplementäre Verzahnung kann entsprechende Flankenwinkel wie die zahnritzelseitige Verzahnung aufweisen.

Von besonderem Vorteil erweist sich, wenn die Ausgestaltung der ritzelseitigen und/oder die dem Zahnritzel zugeordnete komplementäre Verzahnung über entsprechende Einstellung von Profilverschiebung, Modul und/oder Flankenwinkel, insbesondere durch rechnergestütztes Konstruieren optimiert ist Die Merkmale Profilverschiebung, Modul und Flankenwinkel können über Abschnitte der Wälzkurve variiert, insbesondere aufeinander abgestimmt, gewählt werden, können ferner jedoch auch über die gesamte Wälzkurve konstant festgelegt werden.

Bei einer besonderen Ausführungsvariante ist vorgesehen, daß das exzentrisch gelagerte Ritzel mit einem Getriebe, das dem Getriebe eines herkömmlichen Türschließers entspricht, zusammenwirkt. Dies schafft die Möglichkeit, Bestandteile eines herkömmlichen Schließers zu verwenden bzw. einen herkömmlichen Schließer entsprechend umzurüsten.

Besondere Kostenvorteile ergeben sich bei der Herstellung einer entsprechenden Ausführung, bei der vorgesehen ist, daß ein herkömmlicher Türschließer mit seinem Gehäuse und seiner darin befindlichen Mechanik inklusive Getrieb verwendet wird, und daß zwei miteinander kämmende exzentrisch gelagerte Ritzel außerhalb des Gehäuses angeordnet sind, von denen das eine auf der Schließerwelle des herkömmlichen Türschließers und das andere auf einer weiteren, im Gehäuse gelagerten Welle oder Achse gelagert ist, um das Schließmoment auf die Tür zu übertragen. Das das exzentrische Getriebe außerhalb des Gehäuse angeordnet ist, können die exzentrisch gelagerten Zahnräder relativ groß und als dünnere Scheiben ausgeführt sein. Sie können als bilige Stanzteile hergestellt werden. Vorteilhafterweise weist das exzentrisch gelagerte Ritzel eine unrunde, insbesondere ovale bzw. elliptische Wälzkurve auf, kann jedoch auch als rundes exzentrisch gelagertes Ritzel ausgebildet sein.

Weitere vorteilhafte Ausgestaltungen der Erfindung sind in Unteransprüchen angegeben.

Die Erfindung wird nachfolgend anhand von Ausführungsbeispielen in Verbindung mit der Zeichnung näher erläutert; in der Zeichnung zeigt;

Fig. 1 eine schematische Darstellung zur Erläuterung des Funktionsprinzips eines mit exzentrischem Zahnritzel arbeitenden Türschliessers,

Fig. 2 eine schematische Darstellung eines Ausführungsbeispiels eines exzentrisch gelagerten Zahnritzels,

Fig. 3 eine schematische Darstellung eines Ausführungsbeispiels eine dem Ritzel gemäß Figur 2 zugeordneten Verzahnung,

Fig 4 eine schematische Darstellung eines Ausführungsbeispiels eines Kolbens mit Innenverzahnung entsprechend Fig. 3 und einem zugeordneten Ritzel gem. Fig. 2,

Fig. 5 eine schematische Darstellung zur Erläuterung einer insbesondere für Bodentürschliesser geeigneten Ausführungsvariante mit hohem Übersetzungsverhältnis,

Fig. 6 eine schematische Teilschnittdarstellung einer Ausfuhrüngsform eines Obentürschliessers,

Fig. 7 eine schematische Teilschnittdarstellung eines nach der Erfindung ausgebildeten Botürschließers für Pendeltüren,

Fig. 8 eine schematische Teilschnittdarstellung eines nach der Erfindung ausgebildeten Bodentürschließers für Anschlagtüren,

Fig. 9 eine schematische Draufsichtdarstellung einer Ausführungsvariante, die einem herkömmlichen Türschließer und ein zusätzliches Exzentergetriebe verwendet und,

Fig. 10 eine schematische Seitenansicht der Ausführungsvariante gem Fig. 9.

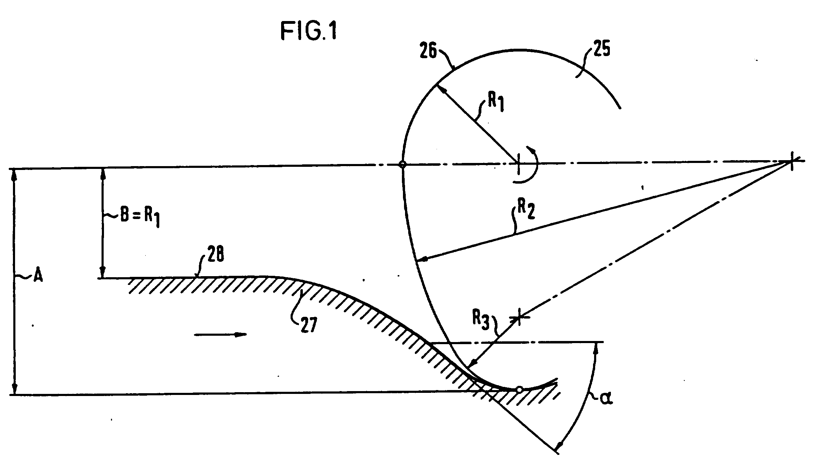

Figur 1 zeigt in schematisiserter Weise ein mit einer Schliesserwelle zu verbindendes Zahnritzel 25, das mit einer kolbenfesten Verzahnung 27 kämmt.

Der nicht näher dargestellte Kolben kann in herkömmlicher Weise mit einer in einem Gehäuse gelagerte Schließerfeder zusammenwirken. Es sind Ausführungen als obenliegende Türschliesser und Bodentürschließer vorgesehen. Im Falle eines Obentürschließers ist das Zahnritzel 25 bzw. die das Zahnritzel tragende Schließerwelle mit einem zur Kraftübertragung zwischen Tür und Rahmen vorgesehenen Gestänge verbunden. Das Gestänge kann vorzugsweise als Gleitarm ausgebildet sein.

Das Zahnritzel 25 besitzt eine Wälzkurve 26, die aus einem ersten kreisförmigen Abschnitt mit dem Radius R1, einem sich daran stetig anschließenden kreisförmigen Abschnitt mit dem Radius R2 und einem sich daran wiederum stetig anschließenden kreisförmigen Abschnitt mit dem Radius R3 zusammensetzt. Der mittlere Wälzkurvenabschnitt mit dem Radius R2 besitzt die geringste Krümmung, d.h. der Radius R2 ist wesentlich größer als die Radialen R1 und R3.

Der Wälzkurvenabschnitt mit dem kleinsten Radius R3 ist in der gezeigten schematischen Darstellung im Eingriff mit der Verzahnung 27, wobei die dargestellte Position dem Öffnungswinkel 0 des Schließers entspricht, d.h. die zugeordnete Türe geschlossen ist. Wird die Türe geöffnet, so wird die auf den Kolben und damit auf die die Verzahnung 27 tragende Zahnstange wirkende Federkraft der Schließerfeder über den Hebelarm A wirksam, d.h. es steht im Bereich kleiner Öffnungswinkel eine hohe Schließkraft zur Verfügung.

Bei einem weiteren Öffnen der Türe bzw. bei einer Vergrößerung des Öffnungswinkels dreht das Zahnritzel 25 entgegen Uhrzeigersinn und die kolbenfeste Verzahnung 27 wird entgegen der Federkraft der Schließerfeder in der Darstellung in Figur 1 nach rechts verschoben. Dabei nimmt der wirksame Hebelarm entsprechend dem gewählten Verlauf der Wälzkurve ab und zwar bis auf den Wert B, der dem Radius R1 der Wälzkurve 26 des Zahnritzels 25 entspricht. Im Dargestellten Beispiel nach Fig. 1 beträgt das Verhältnis von A zu B gleich 2 zu 1. Dieses Verhältnis entspricht der erreichten Übersetzung.

Durch geeignete Wahl des Verlaufs der Wälzkurve 26, die nicht notwendigerweise aus Kreissegmenten zusammengesetzt sein muß, kann ein sehr flacher Verlauf der Wälzkurve 28 der Verzahnung 27 erreicht werden, wobei der flache Verlauf einem kleinen Eingriffswinkel entspricht und damit eine Minimierung der sich auf die Führungswandung für die Verzahnung 27 auswirkenden Reibungskomponente erreicht wird.

Der maximale Eingriffswinkel bei einer Ausgestaltung entsprechend Fig. 1 ist mit $\alpha$ bezeichnet.

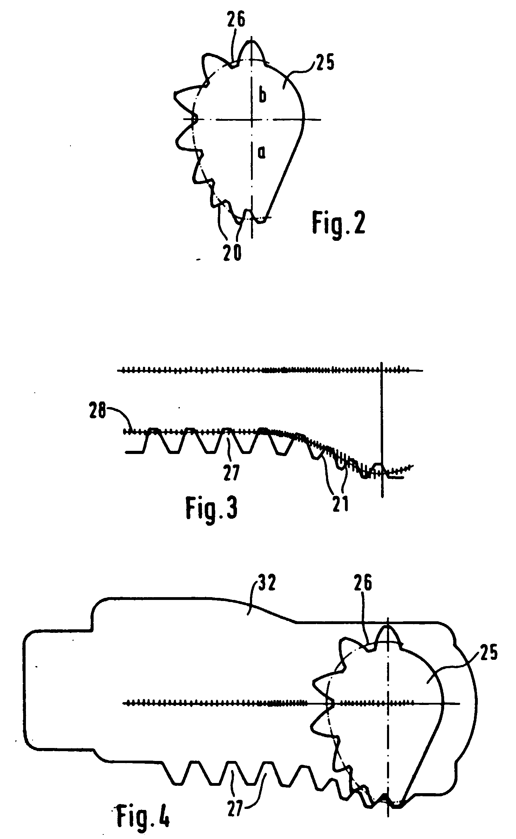

Die Figuren 2 und 3 zeigen Ausführungen eines Zahnritzels 25 bzw. winer zugeordneten kolbenseitigen Verzahnung 27. Figur 4 zeigt hierzu ein Ausführungsbeispiel, bei dem das Ritzel 25 in die Verzahnung 27 eingreift, wobei die kolbenseitige Verzahnung 27 als Innenverzahnung in einem Hohlraum 32 des Kolbens ausgebildet ist. Das Ritzel 25 ist auf der Schließerwelle gelagert, die in den Hohlraum 32 hineinragt.

Das Ritzel 25 trägt nur auf einem Abschnitt seines Umfangs eine Verzahnung mit der es mit der kolbenseitigen Verzahnung 27 kämmt. Die Verzahnung des Ritzels 25 erstreckt sich über einen Wälzkurvenabschnitt von 0 bis 180°.

In der Darstellung in den Fig 2 und 3 sind in die Verzahnungen 25, 27 die Wälzkurven 26, 27 mit einer Skala eingezeichnet, die für die verschiedenen Eingriffsstellungen den jeweiligen Drehwinkel des Ritzels 25 bzw. den zugehörigen Türöffnungswinkel der Tür angibt.

Bei dem Ausführungsbeispiel in Figur 4 entsprechen die Anordnung des Ritzels 25 und der zugehörigen kolbenseitigen Verzahnung 27 sowie deren Wälzkurven 26, 28 dem Schema gem. Figur 1.

In der in Figur 4 dargestellten Position liegt eine Drehstellung des Ritzels 25 von 0° vor. Es wirkt der längere Hebelarm a. Die Tür ist geschlossen. Beim Öffnen der Tür dreht das Ritzel 25 gegen Uhrzeigersinn und kommt bei maximaler Türöffnungsstellung in die Drehstellung von 180°. In dieser Stellung wirkt der kürzere Hebelarm b.

Die Verzahnung des Ritzels 25 und die kolbenfeste Verzahnung 27 sind als Evolventenverzahnung ausgebildet. Dies hat herstellungstechnische Vorteile. Andere Verzahnungsarten sind bei anderen Ausführungen jedoch durchaus möglich.

Die Verzahnung des Ritzels 25 weist Profilverschiebung auf, die über den Umfang des Ritzels 25 zwischen 0-180° unterschiedlich ausgebildet ist. Sie ist im Bereich kleiner Winkel, insbesondere um 0° negativ und im Bereich großer Winkel, und zwar schon ab etwa 30° und verstärkt zwischen 80° bis 180° positiv ausgebildet. Die Profilverschiebung nimmt mit dem Drehwinkel des Ritzels 25 kontinuierlich von den negativen zu den positiven Werten hin zu.

Die kolbenseitige Verzahnung 27 weist entsprechende aber entgegengesetzte Profilverschiebung auf. Es sind demnach in dem kleinen Türöffnungswinkel zugeordneten Bereich positive und in dem Bereich großer Öffnungswinkel negative Werte vorgesehen.

Die in der Verzahnung des Ritzels 25 im Bereich großer Winkel vorliegende positive Profilverschiebung ermöglicht, daß trotz des in diesem Bereich relativ kurzen Halbmessers b eine Schließerwelle mit relativ großem Durchmesser zur Lagerung des Ritzels 25 verwendet werden kann. Andererseits gewährleistet die in der kolbenfesten Verzahnung 27 bei den zugeordneten kleinen Winkeln vorliegende positive Profilverschiebung, daß die Wandstärke der kolbenseitigen Verzahnung 27 in diesem Bereich auch bei großer Übersetzung und steilem Eingriffswinkel $\alpha$ durch die Verzahnung nur relativ wenig geschwächt wird, das heißt, das die Wandstärke auch bei der gewünschten relativ schmalen Bauweise nicht zu dünn wird. Dies bedeutet, daß auch bei großer Übersetzung ein relativ schlanker Kolben verwendet werden kann.

Ferner weist die Verzahnung des Ritzels 25 über den Wälzkurvenabschnitt zwischen 0 bis 180° variierten, unterschiedlichen Modul auf. Das Gleiche gilt für die kolbenfeste Verzahnung 27.

Der Modul nimmt mit dem zugeordneten Türöffnungswinkel kontinuierlich zu, und zwar umgekehrt proportional zum jeweiligen Halbmesser des Ritzels 25 bzw. zum jeweilig wirksamen Hebelarm. Dies bedeutet, daß im Bereich kleiner Türöffnungswinkel (um 0°) bei gleichzeitig großem Hebelarm (um a) relativ kleiner Modul, d.h. kleiner Zähne, und im Bereich größerer Winkel bei gleichzeitig kleinerem Hebelarm (um b) größerer Modul, d.h. größere Zähne vorgesehen sind.

Die zugeordnete komplementäre kolbenfeste Verzahnung 27 weist entsprechende Modulvariation auf, in dem im Bereich kleiner Öffnungswinkel relativ kleiner Modul und im Bereich größerer Winkel größerer Modul vorgesehen ist.

Der Modul ist so gewählt, daß die Verzahnung 26, 27 im gesamten Bereich mit ungefähr gleicher Festigkeit ausgelegt ist. Ferner ergibt sich bei kleinem Modul ein besonders flüssiger Ablauf des Wälzvorgangs wegen der geringeren Flankenreibung bei kleinem Modul. Dadurch, daß im Bereich größer Winkel zwar relativ großer Modul aber gleichzeitig auch positive Profilverschiebung im Ritzel 25 vorgesehen ist, wird der bei großem Modul und kleinem Halbmesser sonst auftretende nachteilige Hinterschnitt vermieden.

Die Verzahnung des Ritzels 25 und die kolbenfeste Verzahnung 27 weisen außerdem speziell eingestellte Flankenwinkel auf, wie in den Figuren 2 bis 4 zu erkennen ist, sind insbesondere die Zähne im Bereich der kleineren Türöffnungswinkel unsymmetrisch ausgestaltet, indem die druckseitigen Flanken-die in der Zeichnung rechten Flanken 20 des Ritzels 25 bzw. die linken Flanken 21 der kolbenseitigen Verzahnung 27-steiler, relativ zur Normalen auf die Wälzkurve im Bereich der Flanken verlaufen.

Dies gewährleistet, daß die Kraftkomponente in Richtung auf die Kolbenwand reduziert und demzufolge auch die Wandreibung gering gehalten wird. Damit ergibt sich ein guter Wirkungsgrad.

Bei dem Ausführungsbeispiel in Figur 4 stellen jeweils die Flanken 20, 21 der Zähne die Druckseite dar, und zwar sowohl beim Öffnen als auch beim Schließen. Durch ihre steilere Ausbildung wird also beim Öffnen wie auch beim Schließen jeweils die Wandreibung reduziert.

Die Herabsetzung der Reibung ist inbesondere beim Öffnen wichtig, denn dabei wirken Reibung und Federkraft in die gleiche Richtung und zwar der Öffnungsbewegung entgegen; anders beim Schließen, dort wirken Reibung und Federkraft entgegengesetzt. Somit ist also das aufzubringende Öffnungsmoment jeweils größer als das Schließmoment.

In den DIN-Vorschriften für Türschließer wird gefordert, daß das Öffnungsmoment nicht mehr als das 1,5 fache des Schließmoments betragen darf. Dies kann mit der erfindungsgemäßen Ausgestaltung der Flankenwinkel ohne weiteres erreicht werden.

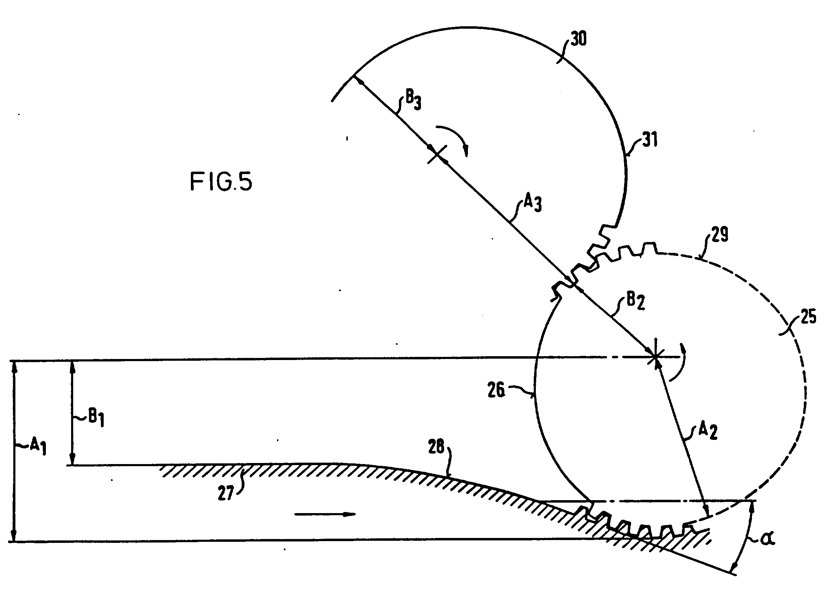

Die schematische Prinzip-Darstellung nach Fig. 5 zeigt eine besonders für Bodentürschließer geeignete Anordnung. Dabei ist mit der Schließerachse ein exzentrisches Zahnritzel 30 verbunden, das mit einem weiteren, drehbar gelagerten, exzentrischen Zahnritzel 25 kämmt, das wiederum in Eingriff steht mit einer mit dem Kolben fest verbundenen, insbesondere als Zahnstange ausgebildeten Verzahnung 27.

Die Wälzkurve 31 des exzentrischen Zahnritzels 30 verläuft bezüglich der Drehachse derart, daß die bezüglich des Zahnritzels 25 wirksamen Hebelarme sich von dem Maximalwert $A_3$ bis zum Minimalwert $B_3$ über den vollen Öffnungswinkel des schließers ändern.

Der Wälzkurve 31 des Ritzels 30 ist am Ritzel 25 eine Wälzkurve 29 zugeordnet, die strichliert angedeutete ist und sich etwa über den halben Umfang des Ritzels 25 erstreckt. Die andere Hälfte des Umfangs des Ritzels 25 weist eine mit der Verzahnung 27 zusammenwirkende Wälzkurve 26 auf, der wiederum die sehr flach verlaufende Wälzkurve 28 der Verzahnung 27 zugeordnet ist.

Der minimal wirksam werdende Radius des Ritzels 25 ist mit B2 und der maximal wirksam werdende Radius mit $A_2$ gekennzeichnet.

Die im Zusammenwirken von Ritzel 25 und Verzahnung 27 wirksam werdenden Übersetzungen sind mit $A_1$ und $B_1$ gekennzeichnet.

Bei einer Verwendung dieser Ausführung ergibt sich ein besonders günstiges k-Maß von beispielsweise 20 mm, wobei für den Bodentürschließer von wesentlicher Bedeutung ist, daß trotz der sehr flach verlaufenden Wälzkurve 28 der Verzahnung 27 ein sehr hohes Übersetzungsverhältnis erzielt werden kann. Das Übersetzungsverhältnis bestimmt sich aus dem Produkt der Einzelübersetzungen, d.h. im vorliegenden Fall aus dem Produkt

$$\frac{A_3}{B_3} \times \frac{A_2}{B_2} \times \frac{A_1}{B_1}.$$

Ein Verhältnis von beispielsweise 4,5 zu 1 ist in der Praxis problemfrei zu erreichen.

Zu erwähnen ist auch noch, daß die Eingriffsbereiche des Zahnritzels 25, d.h. die vorstehend als Wälzkurven bezeichneten Bereich 26, 29 sich auch überlappen können. Die Verzahnung in Fig. 5 kann in entsprechender Weise wie in den Fig. 2 bis 4 mit Variation der Profilverschiebung, des Moduls und/ oder des Flankenwinkels ausgebildet sein.

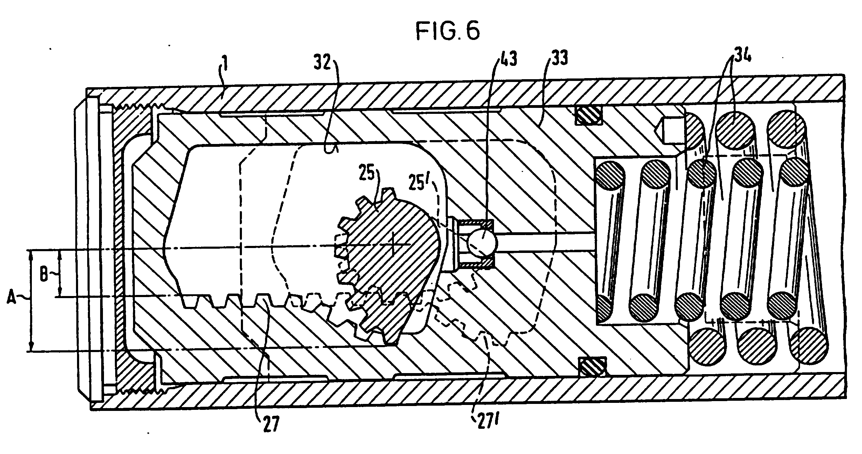

Fig. 6 zeigt eine Teilschnittdarstellung eines nach der Erfindung ausgebildeten Obentürschließers.

In dem Gehäuse 1 ist ein Kolben 33 angeordnet, der im üblicher Weise mittels Druckfedern 34 in die Schließstellung vorgespannt ist. Der Kolben 33 besitzt in seinem von den Federn 34 abgewandten Bereich eine Ausnehmung bzw. einen Hohlraum 32, in dem ein mit der Schließerwelle drehfest verbundenes exzentrisches Ritzel 25 angeordnet ist. Dieses Ritzel 25 steht im Eingriff mit einer hinsichtlich seiner Wälzkurve der entsprechenden Wälzkurve des Ritzels 25 angepaßten Verzahnung 27. Ein zur Dämpfungseinrichtung gehörendes Rückschlagventil 43 ist im Bereich der Kolbenausnehmung 32 federseitig vorgesehen.

Die mit durchgezogenen Linien gezeichnete Position des Kolbens 33 entspricht der Schließstellung. In dieser Position ist zwischen dem exzentrischen Ritzel 35 und der Verzahnung 27 der größte Hebelarm A wirksam.

Wird der dem Schließer zugeordnete Flügel in Öffnungsrichtung verschwenkt, dann bewegt sich der Kolben 33 aufgrund des Zusammenwirkens von Ritzel 25 und Verzahnung 27 in die strichliert dargestellte Position, wobei der Hebelarm ständig kleiner wird und schließlich in der mit 25' und 27' gekennzeichneten Position von Ritzel und Verzahnung den kleinsten Wert B erreicht.

Bei dieser Ausführungsform ist der flache Verlauf der Verzahnung 27 zu beachten, der sicherstellt, daß die Reibungskomponente zwischen Kolben 33 und Gehäuse 1 minimal bleibt.

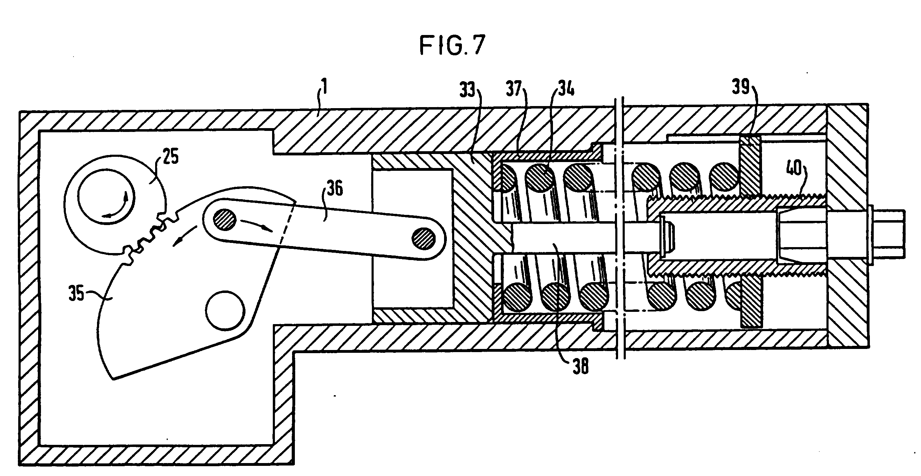

Fig. 7 zeigt eine Ausführungsform der Erfindung in Form eines Bodentürschließers für Pendeltüren. Dabei ist das exzentrische Ritzel 25 zur Erzielung eines möglichst kompakten Aufbaus in einem Eckbereich des Gehäuses 1 angeordnet und steht in Eingriff mit einem mittensymmetrischen Zahsegment 35. Dieses Zahnsegment 35 ist mittig angelenkt und steht über einen Hebel 36 mit dem Kolben 33 in Verbindung. Der Hebel 36 ist beidendig schwenkbar angelenkt.

Der Kolben 33 ist mit einer Stange 38 versehen, die im Bereich ihres Endes eine axial verstellbare Stütz- und Führungsscheibe 39 trägt. Zwischen dieser Stütz- und Führungsscheibe 39 und einer in der Mittelstellung unmittelbar an den Kolben 33 angrenzenden Anschlaghülse 37 ist eine Druckfeder 34 angeordnet, die in Abhängigkeit von der Richtung der Schwenkbewegung der zugeordneten Pendeltür beaufschlagt wird, und zwar zum einen über die Stütz- und Führungsscheibe 39 bei Abstützung an der Anschlaghülse 37 und zum anderen durch die Anschlaghülse 37 bei Abstützung an der Stütz- und Führungsscheibe 39, die an einer verstellbaren Hülse 40 befestigt ist, die einerseits die Kolbenstange 38 verschiebbar aufnimmt und andererseits von außerhalb des Gehäuses in Axialrichtung verstellt werden kann.

Durch gezielte Vorgabe der Abwälzkurven von Exzenterritzel 25 und Zahnsegment 35 kann wiederum der Schließkraftverlauf optimal vorgegeben werden.

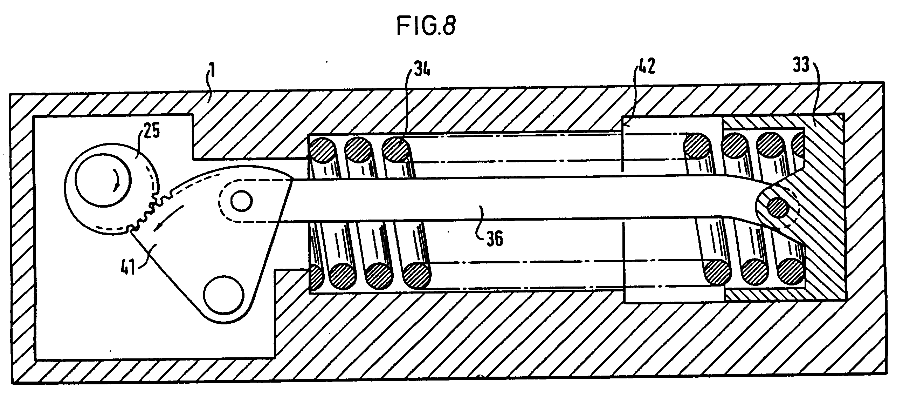

Fig. 8 zeigt eine Ausführungsform der Erfindung in Form eines Bodentürschließers für Anschlagtüren.

Bei dieser Ausführungsform ist das exzentrische Zahnritzel 35 wiederum bevorzugt in einem Eckbereich des Gehäuses angeordnet und wirkt mit einem Exzentersegment 41 zusammen, das schwenkbar gelagert und über eine Verbindungsstange 36 mit dem Kolben 33 gekuppelt ist. Der topfförmig ausgebildete Kolben 33 ist mittels einer Feder 34 in Richtung zum Boden des Gehäuses 1 vorgespannt und zwischen diesem Boden und einem Gehäuseanschlag 42 bewegbar.

Dei Exzentrizitäten bzw. Abwälzkurven von Zahnritzel 25 und Zahnsegment 21 können wiederum entsprechend dem gewünschten Schließkraftverlauf gewählt werden.

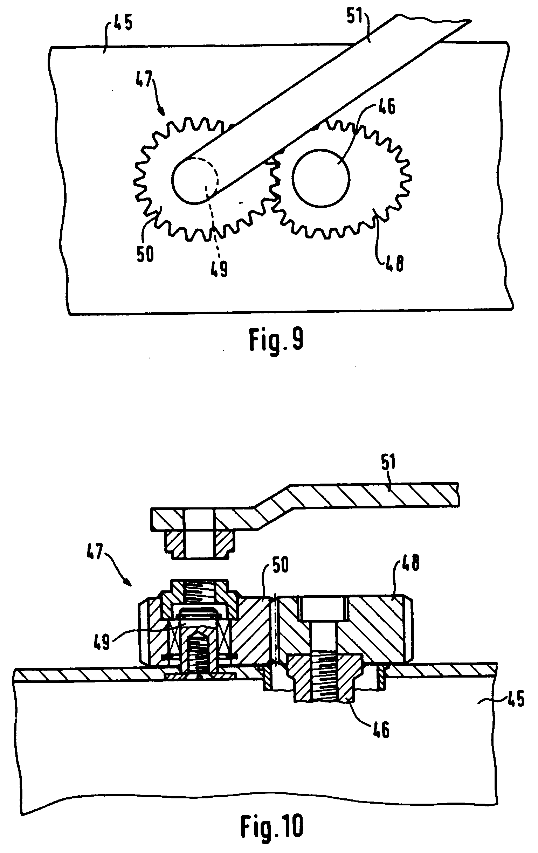

Die in den Figuren 9 und 10 gezeigte Ausführungsvariante stellt eine erfindungsgemäße Abwandlung eines herkömmlichen Türschliebers dar. Vorzugsweise wird ein herkömmlicher, obenliegender Türschließer verwendet. Er weist ein Gehäuse 45 auf, mit darin gelagerter Schließerwelle 46 und einem nicht dargestellten, innerhalb des Gehäuses 45 auf der Schließerwelle 46 zentrisch gelagerten Ritzel, das mit einer ebenfalls nicht dargestellten kolbenfesten Verzahnung im Gehäuse 45 kämmt.

Der insoweit herkömmliche Schließer ist mit einem zusätzlichen Ovalzahnradgetriebe 47 ausgerüstet, das im Ausführungsbeispiel als elliptisches Getriebe ausgeführt ist, indem auf einen aus dem Gehäuse 45 ragenden Ende der Schließerwelle 46 ein exzentrisch gelagertes Zahnrad 48 aufgesetzt ist, das mit einem weiteren, ebenfalls auf dem Gehäuse auf einer zusätzlichen Achse 49 gelagerten Zahnrad 50 kämmt. Das Zahnrad 50 ist mit dem Gestänge, das im vorliegenden Fall als Gleitarm 51 ausgebildet ist, verbunden. Alternativ kann auch die Achse 49 als mit dem Gleitarm 51 verbundene Welle ausgebildet sein, die dann also die Schließerwelle des erfindungsgemäßen Türschließers darstellt.

Die Zahnräder 48, 50 sind als Ellipsenzahnräder ausgeführt. Sie können je nach Bedarf als relativ dünne Scheiben mit relativ großen Halbmessern dimensioniert sein; denn sie sind außerhalb des Gehäuses 45 angeordnet und daher nicht durch die Abmessungen des Innenraums begrenzt. Die Zahnräder 48, 50 lassen sich daher als billige Stanzteile herstellen.

Das mit den Zahnrädern 48, 50 gebildete Getriebe 47 bringt die gewünschte Übersetzung und gewährleistet einen günstigen Momentenverlauf auch bei Verwendung eines Gleitarms. Ferner wird die gewünschte Bauweise des herkömmlichen Schließers beibehalten. Grundsätzlich kann das exzentrisch gelagerte Ritzel einen Wälzkurvenverlauf, wie in den Figuren 1 bis 5, aufweisen und auch das gesamte zusätzliche Zahnradgetriebe kann entsprechend der Ausführungen in den Figuren 1 bis 5 ausgebildet sein.

Allen Ausführungsformen der Erfindung ist gemeinsam, daß sich eine technisch einfache und wirtschaftlich zu realisierende Konstruktion ergibt, wobei die exzentrischen Elemente ebenfalls kostengünstig herzustellen sind, da für jedes spezielle Element nur ein einziges Mal ein entsprechendes Räumwerkzeug bzw. eine entsprechende Form gefertigt werden muß.

Die stets erzeilbar Kompaktheit des jeweiligen Schließers ist bei allen Ausführungsformen gepaart mit einem optimalen Verlauf des Gesamtschließmoments, das bestmöglich an den jeweiligen Einsatzzweck angepaßt werden kann.

**Patentansprüche**

1. Türschließer mit einem in einem Gehäuse (1) geführten Kolben (33), zumindest einer mit dem Kolben (33) zusammenwirkenden Schließerfeder (34) und einer hydraulischen Dämpfungseinrichtung und mit einer über ein Getriebe (25, 30, 48; 27, 35, 41; 47) mit dem Kolben (33) verbundenen Schließerwelle (46) oder Schließerachse, wobei das Getriebe mindestens ein Zahnritzel (25, 30, 48) aufweist, das exzentrisch gelagert ist, dadurch **gekennzeichnet,**

daß das Zahnritzel (25, 30, 48) auf seinem Umfang und/oder die dem Zahnritzel (25, 30, 48) zugeordnete komplementäre Verzahnung (27, 50) auf Abschnitten der Wälzkurve (26,28) unterschiedlich ausgestaltete Zähne aufweist,

indem die zahnritzelseitige Verzahnung (25) und/oder die dem Zahnritzel zugeordnete komplementäre Verzahnung (27) über ihre Wälzkurve variierte Profilverschiebung aufweist.

2. Türschließer nach Anspruch 1, dadurch **gekennzeichnet,** daß die Profilverschiebung der zahnritzelseitigen Verzahnung (25) in einem Wälzkurvenabschnitt (26) mit zugeordnetem kleinen Öffnungswinkel negativ ausgebildet ist und/oder, daß die Profilverschiebung der zahnritzelseitigen Verzahnung (25) in einem Wälzkurvenabschnitt (26) mit zugeordnetem großen Türöffnungswinkel positiv ausgebildet ist.

3. Türschließer mit einem in einem Gehäuse (1) geführten Kolben (33), zumindest einer mit dem Kolben (33) zusammenwirkenden Schließerfeder (34) und einer hydraulischen Dämpfungseinrichtung und mit einer über ein Getriebe (25, 30, 48; 27, 35, 41; 47) mit dem Kolben (33) verbundenen Schließerwelle (46) oder Schließerachse, wobei das Getriebe mindestens ein Zahnritzel (25, 30, 48) aufweist, das exzentrisch gelagert ist, dadurch **gekennzeichnet,**

daß das Zahnritzel (25, 30, 48) auf seinem Umfang und/ oder die dem Zahnritzel (25, 30, 48) zugeordnete komplementäre Verzahnung (27, 50) auf Abschnitten der Wälzkurve (26, 28) unterschiedlich ausgestaltete Zähne aufweist,

indem die zahnritzelseitige Verzahnung (25) und/oder die dem Zahnritzel (25) zugeordnete komplementäre Verzahnung (27) über ihre Wälzkurve (26, 28) Zähne mit unterschiedlichem Modul aufweist und dadurch die Festigkeit der Verzahnung in den Wälzkurvenabschnitten eingestellt wird,

wobei die Verzahnung (25, 27) in Abschnitten der Wälzkurve (26, 28) mit zugeordnetem kleinen Türöffnungswinkel relativ kleinem Modul und in Abschnitten der Wälzkurve (26, 28) mit zugeordnetem großen Türöffnungswinkel größeren Modul aufweist.

4. Türschließer nach Anspruch 3, dadurch **gekennzeichnet,** daß der Modul umgekehrt proportional zum wirksamen Hebelarm (A, B; a, b) des Ritzels (25) ausgebildet ist.

5. Türschließer mit einem in einem Gehäuse (1) geführten Kolben (33), zumindest.einer mit dem Kolben (33) zusammenwirkenden Schließerfeder (34) und einer hydraulischen . Dämpfungseinrichtung und mit einer über ein Getriebe (25, 30, 48; 27, 35, 41; 47) mit dem Kolben (33) verbundenen Schließerwelle (46) oder Schließerachse, wobei das Getriebe mindestens ein Zahnritzel (25, 30, 48) aufweist, das exzentrisch gelagert ist, dadurch **gekennzeichnet,**

daß das Zahnritzel (25, 30, 48) auf seinem Umfang und/oder die dem Zahnritzel (25, 30, 48) zugeordnete komplementäre Verzahnung (27, 50) auf Abschnitten der Wälzkurve (26, 28) unterschiedlich ausgestaltete Zähne aufweist,

indem die zahnritzelseitige Verzahnung (25, 20) und/oder die dem Zahnritzel (25) zugeordnete komplementäre Verzahnung (27, 21) mindestens einen unsymmetrisch ausgebildeten Zahn mit unterschiedlichen Flankenwinkeln aufweist, bei dem die druckseitige Flanke (20,21) einen spitzeren Flanken winkel als die nicht druckseitige Flanke aufweist,

wobei die dem Zahnritzel zugeordnete komplementäre Verzahnung (27, 21) eine S-kurvenförmige Wälzkurve (27) aufweist und unsymmetrisch ausgebildete Zähne insbesondere im Bereich des Wendepunktes der Wälzkurve (27) angeordnet sind.

6. Türschließer nach Anspruch 5, dadurch **gekennzeichnet,** daß in einem einen kleinen Türöffnungswinkel zugeordneten Wälzkurvenabschnitt (26, 28) die druckseitige Flanke (20, 21) des Zahns einen spitzeren Flankenwinkel als die nichtdruckseitige Flanke desselben Zahns aufweist.

7. Türschließer nach einem der vorangehenden Ansprüche, dadurch **gekennzeichnet,** daß die Ausgestaltung der Zähne des Zahnritzels (25, 30, 48) und/oder der komplementären Verzahnung (25, 50) in Abhängigkeit von den den Wälzkurvenabschnitten (26, 28) zugeordneten Türöffnungswinkeln und/oder in Abhängigkeit vom jeweils wirksamen Hebelarm variiert ist.

8. Türschließer nach einem der vorangehenden Ansprüche, dadurch **gekennzeichnet,** daß das Zahnritzel (50, 48) mit auf seinem Umfang unterschiedlich ausgebildeten Zähnen mit einem Getriebe, das dem Getriebe eines herkömmlichen Türschließers (45) entspricht, zusammenwirkt.

9. Türschließer nach Anspruch 8, dadurch **gekennzeichnet,** daß ein herkömmlicher Türschließer mit seinem Gehäuse (45) und seiner darin befindlichen Mechanik inklusive Getriebe verwendet wird; und daß zwei miteinander kämmende, exzentrisch gelagerte Zahnritzel (48, 50) außerhalb des Gehäuses (45) angeordnet sind, von denen das eine (48) auf der Schließerwelle (46) des herkömmlichen Türschließers und das andere (50) auf einer weiteren, im Gehäuse (45) gelagerten Welle oder Achse (49) gelagert ist, die nunmehr die Schließerwelle bzw. die Schließerachse bildet.

## Claims

1. Door closer having a piston (33) guided in a housing (1), at least one closer spring (34) which cooperates with the piston (33) and a hydraulic damping device, and a closer shaft (46) or closer axle connected to the piston (33) via a transmission (25, 30, 48; 27, 35, 41; 47), with the transmission having at least one pinion gear (25, 30, 48) which is eccentrically journalled, characterised in that the pinion gear (25, 30, 48) has differently shaped teeth at its periphery, and/or the complementary gear tooth arrangement (27, 50) associated with the pinion gear (25, 30, 48) has differently shaped teeth on sections of the pitch curve (26, 28) in that the tooth arrangement (25) at the pinion gear side and/or the complementary tooth arrangement (27) associated with the pinion gear has or have a profile offset which varies over its or their pitch curve.

2. Door closer in accordance with claim 1, characterised in that the profile offset of the toothed arrangement (25) at the pinion gear side is made negative in a pitch curve section (26) with an associated small angle of door opening and/or in that the profile offset is made positive in a pitch curve section (26) with an associated large angle of door opening.

3. Door closer having a piston (33) guided in a housing (1), at least one closer spring (34) which cooperates with the piston (33) and a hydraulic damping device, and a closer shaft (46) or closer axle connected to the piston (33) via a transmission (25, 30, 48; 27, 35, 41; 47), with the transmission having at least one pinion gear (25, 30, 48) which is eccentrically journalled, characterised in that

the pinion gear (25, 20, 48) has differently shaped teeth at its periphery and/or the complementary gear tooth arrangement (27, 50) associated with the pinion gear (25, 30, 48) has differently shaped teeth on sections of the pitch curve (26, 28) in that the toothed arrangement (25) at the pinion gear side and/or the complementary toothed arrangement (27) associated with the pinion gear (25) has or have teeth with a different modulus over its or their pitch curve (s) (26, 28), with the strength of the toothed arrangement in the pitch curve sections being set thereby,

wherein the toothed arrangement (25, 27) in sections of the pitch curve (26, 28) with an associated small angle of door opening has a relatively small modulus and has a larger modulus in sections of the pitch curve (26, 28) with an associated large angle of door opening.

4. Door closer in accordance with claim 3, characterised in that the modulus is made inversely proportional to the effective lever arm (A, B; a, b) of the pinion (25).

5. Door closer having a piston (33) guided in a housing (1), at least one closer spring (34) which cooperates with the piston (33) and a hydraulic damping device, and a closer shaft (46) or closer axle connected to the piston (33) via a transmission (25, 30, 48; 27, 35, 41; 47), with the transmission having at least one pinion gear (25, 30, 48) which is eccentrically journalled, characterised in that

the pinion gear (25, 20, 48) has differently shaped teeth at its periphery and/or the complementary gear tooth arrangement (27, 50) associated with the pinion gear (25, 30, 48) has differently shaped teeth on sections of the pitch curve (26, 28) in that the toothed arrangement (25, 20) at the pinion gear side and/or the complementary toothed arrangement (27, 21) associated with the gear pinion (25) has at least one non-symmetrically shaped tooth with different flank angles,

wherein the pressure-side flank (20, 21) has a more acute flank angle than the non pressure-side flank, and wherein the complementary toothed arrangement (27, 21) associated with the pinion gear has an S-shaped pitch curve (27) and non-symmetrically shaped teeth, in particular in the region of the point of inflection of the pitch curve (27).

6. Door closer in accordance with claim 5, characterised in that, in a pitch curve section (26, 28) associated with a small angle of door opening, the pressure-side flank (20, 21) of the tooth has a steeper flank angle than the non pressure-side flank of the same tooth.

7. Door closer in accordance with one of the preceding claims, characterised in that the design of the teeth of the pinion gear (25, 30, 48) and/or of the complementary toothed arrangement (25, 50) is varied in dependence on the angles of door opening associated with the pitch curve sections (26, 28) and/or in dependence on the respectively active lever arm.

8. Door closer in accordance with one of the preceding claims, characterised in that the pinion gear (50, 48) which has differently shaped teeth at its periphery cooperates with a transmission which corresponds to the transmission of a customary door closer (45).

9. Door closer in accordance with claim 8, characterised in that a customary door closer with its housing and the mechanism including transmission located therein is used; and in that two eccentrically journalled meshing pinions (48, 50) are arranged outside of the housing (45) of which the one (48) is mounted on the closer shaft (46) of the customary door closer and the other (50) is mounted on a further shaft or axle (49) mounted in the housing (45), said further shaft now forming the closer shaft or closer axle.

**Revendications**

1. Ferme-porte comprenant un piston (33) guidé dans un boîtier (1), au moins un ressort de fermeture (34) qui coopère avec le piston (33), et un dispositif d'amortissement hydraulique, et un arbre de fermeture (46) ou un axe de fermeture qui est relié au piston (33) par un entraînement (25, 30, 48 ; 27, 35, 41 ; 47), l'entraînement comprenant au moins un pignon (25, 30, 48) qui est monté sur axe excentrique, caractérisé

en ce que le pignon (25, 30, 48), sur sa périphérie et/ou la denture complémentaire (27, 50) associée au pignon (25, 30, 48) présentent sur des segments de la courbe de roulement (26, 28) des dents de configuration variable, cependant que la denture (25) du pignon et/ou la denture complémentaire (27) associée au pignon présentent un décalage de profil qui varie sur leur courbe de roulement.

2. Ferme-porte selon la revendication 1, caractérisé en ce que le décalage du profil de la denture (25) du pignon est négatif dans un segment de la courbe de roulement (26) correspondant à un petit angle d'ouverture et/ou en ce que le décalage du profil de la denture (25) du pignon est positif dans un segment (26) de la courbe de roulement qui correspond à un grand angle d'ouverture de la porte.

3. Ferme-porte comprenant un piston (33) guidé dans un boîtier (1), au moins un ressort de fermeture (34) qui coopère avec le piston (33), et un dispositif d'amortissement hydraulique, et un arbre de fermeture (46) ou un axe de fermeture qui est relié au piston (33) par un entraînement (25, 30, 48 ; 27, 35, 41 ; 47), l'entraînement comprenant au moins un pignon (25, 30, .48) qui est monté sur axe excentrique, caractérisé

en ce que le pignon (25, 30, 48), sur sa périphérie, et/ou la denture complémentaire (27, 50) associée au pignon (25, 30, 48) présentent sur des segments de la courbe de roulement (26, 28) des dents de configuration variable, cependant que la denture (25) du pignon et/ou la denture complémentaire (27) associée au pignon (25) présentent des dents de module variable sur la longueur de leur courbe de roulement (26, 28, et que la solidité de la denture est ainsi réglée dans les segments de la courbe de roulement, cependant que la denture (25, 27) présente un module relativement petit dans les segments de la courbe de roulement (26, 28) qui sont associés à un petit angle d'ouverture de la porte et un plus grand module dans les segments de la courbe de roulement (26, 28) qui sont associés à de grands angles d'ouverture de la porte.

4. Ferme-porte selon la revendication 3, caractérisé en ce que le module est inversement proportionnel à la longueur du bras de levier effectif (A, B, a, b,) du pignon (25).

5. Ferme-porte comprenant un piston (33) guidé dans un boîtier (1), au moins un ressort de fermeture (34) qui coopère avec le piston (33), et un dispositif d'amortissement hydraulique, et un arbre de fermeture (46) ou un axe de fermeture qui est relié au piston (33) par un entraînement (25, 30, 48 ; 27, 35, 41 ; 47), l'entraînement comprenant au moins un pignon (25, 30, 48) qui est monté sur axe excentrique, caractérisé

en ce que le pignon (25, 30, 48), sur sa périphérie, et/ou la denture complémentaire (27, 50) associée au pignon (25, 30, 48) présentent sur des segments de la courbe de roulement (26, 28) des dents de configuration variable, cependant que la denture (25, 20) du pignon et/ou la denture complémentaire (27, 21) associée au pignon (25) présentent au moins une dent de forme asymétrique qui possède des angles de flancs de dent différents, le flanc côté pression (20, 21) présentant un angle de pression plus aigu que celui qui n'est pas du côté pression,
la denture complémentaire (27, 21) associée au pignon présentant une courbe de roulement (27) en forme de S, et des dents de configuration asymétrique étant disposées en particulier dans la région du point d'inflexion de la courbe de roulement (27).

6. Ferme-porte selon la revendication 5, caractérisé en ce, dans un segment (26, 28) de la courbe de roulement qui est associé à un petit angle d'ouverture de la porte, le flanc côté pression (20, 21) de la dent présente un angle de pression plus aigu que celui de la même dent qui n'est pas du côté pression.

7. Ferme-porte selon une quelconque des revendications précédentes, caractérisé en ce que la configuration des dents du pignon (25, 30, 48) et/ou de la denture complémentaire (25, 50) varie en fonction des angles d'ouverture de la porte qui sont associés aux segments (26, 28) de la courbe de roulement et/ou fonction du bras de levier qui intervient dans chaque position donnée.

8. Ferme-porte selon une des revendications précédentes, caractérisé en ce que le pignon (50, 48) possédant des dents dont la configutation varie sur sa périphérie coopère avec un entraînement qui correspond à l'entraînement d'un ferme-porte traditionnel (45).

9. Ferme-porte selon la revendication 8, caractérisé en ce qu'il utilise un ferme-porte traditionnel, avec son boîtier (45) et son entraînement, y compris la mécanique placée à l'intérieur du boîtier ;
et en ce que deux pignons (48, 50) engrenant l'un avec l'autre, montés sur axes excentriques, sont agencés à l'extérieur du boîtier (45), l'un (48) étant monté sur l'arbre de feremture (46) du ferme-porte traditionnel et l'autre (50) sur un autre arbre ou axe (49) tourillonnant dans le boîtier (45), et qui forme maintenant l'arbre ou axe de fermeture du ferme-porte.

FIG.1

EP 0 243 786 B2

Fig.2

Fig.3

Fig.4

FIG.5

EP 0 243 786 B2

FIG.6

FIG.7

EP 0 243 786 B2

FIG.8

EP 0 243 786 B2

Fig.9

Fig.10